Europäisches Patentamt

European Patent Office

Office européen des brevets

(19)

(11) **EP 1 214 895 A1**

(12) **DEMANDE DE BREVET EUROPEEN**

(43) Date de publication:
**19.06.2002 Bulletin 2002/25**

(51) Int Cl.⁷: $A23L\ 1/40$, A23L 1/052, A23L 1/22

(21) Numéro de dépôt: **00127590.8**

(22) Date de dépôt: **15.12.2000**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI** | • **Henry, Sylvie**<br>**8400 Winterthur (CH)**<br>• **Brunschweilers**<br>**8307 Essretikon (CH)**<br>• **Bucher, Christoph**<br>**5400 Baden (CH)** |
| (71) Demandeur: **SOCIETE DES PRODUITS NESTLE S.A.**<br>**1800 Vevey (CH)** | (74) Mandataire: **Wavre, Claude-Alain**<br>**55, avenue Nestlé**<br>**1800 Vevey (CH)** |
| (72) Inventeurs:<br>• **Dupart, Pierre**<br>**8053 Zuerich/Witikon (CH)** | |

(54) **Aide culinaire**

(57) Aide culinaire à base de matière grasse, d'agents aromatisants et d'agents liants présentant à une température de 40°C, une viscosité plastique comprise entre 1 et 20 Pa.s et une limite d'écoulement comprise entre 0,5 et 20 Pa. Grâce à sa moulabilité fidèle, cet aide culinaire permet la réalisation de formes mou-lées des plus simples aux plus complexes présentant des détails particulièrement fins. Le présent aide culinaire est particulièrement adapté à la préparation au four micro-ondes.

Procédé pour préparer un tel aide culinaire.

EP 1 214 895 A1

**Description**

La présente invention se rapporte au domaine des aides culinaires et en particulier aux aides culinaires moulés sous forme diverses et variées solides à température ambiante. L'aide culinaire selon l'invention est particulièrement adapté au chauffage en milieu aqueux, par exemple dans un four micro-ondes pour la reconstitution rapide de soupes, bouillons ou sauces.

Des produits culinaires pour la préparation rapide de soupes, sauces ou bouillons existent principalement sous forme pulvérulente voire sous forme de poudre agglomérée ou compactée. Certaines soupes ou sauces existent aussi sous forme liquide, stérilisées, pasteurisées ou même surgelées. Ces produits ont leurs avantages respectifs, à savoir gain de place et conservation facilitée pour les produits à base de poudre, authenticité préservée et rapidité d'usage pour les seconds. Cependant, ces produits présentent aussi des inconvénients inhérents à leur forme de présentation. Les produits pulvérulents sont souvent difficiles à dissoudre, forment des grumeaux, ceci particulièrement lors du chauffage au four micro-ondes et nécessitent alors de fréquents remuages. De leur côté, les produits liquides présentent le problème de l'encombrement mais aussi de leur conservation une fois entamés. D'autre part les produits pulvérulents ne se prêtent pas bien à la réalisation de formes moulées aux dessins, contours, reliefs et détails les plus fins. Ainsi, la réalisation de formes ornementales ludiques est difficile avec ces produits, sans compter le risque d'effritement de ce type de produit lors de la manipulation.

Ainsi se sont développés des procédés de fabrication d'aides culinaires solides de formes diverses et variées sur la base de procédés de lyophilisation. De tels procédés permettent de réaliser des formes moulées présentant des détails plus ou moins fins grâce à l'étape de congélation du produit liquide ou fluide dans un moule avant sublimation. Cependant ce genre de procédé est particulièrement onéreux et de plus la formation de grumeaux lors de l'ajout de l'eau n'est pas évitée pour autant. En outre le relief de ces produit n'est pas très satisfaisant car assez rugueux et pas du tout brillant et lisse.

Des tentatives ont été développées pour additionner les poudres avec de la matière grasse de manière à les rendre plus malléables et donc améliorer leur moulabilité. US 3966993 décrit un aide culinaire sous forme de barre constitué de 40 à 60 % de matière grasse solide à température ambiante. Un tel taux de matière grasse particulièrement élevé ne convient guère pour la reconstitution de soupes ou bouillons.

Le but de la présente invention est de fournir un aide culinaire moulable capable d'épouser les reliefs les plus fins, solide à température ambiante, non friable et adéquat pour la reconstitution rapide de soupes ou bouillons par addition d'eau chaude ou par chauffage au four micro-ondes en milieu aqueux.

A cet effet, l'aide culinaire selon la présente invention compren 25 à 39 % de matière grasse, 20 à 70 % d'agents aromatisants, 5 à 50 % d'agents liants et est caractérisé en ce qu'il présente à une température d'environ 37 à 43°C, de préférence 40°C, une viscosité plastique comprise entre 1 et 20 Pa.s, de préférence entre 2 et 8 Pa.s et une limite d'écoulement comprise entre 0,5 et 20 Pa, de préférence entre 1 et 10 Pa.

La viscosité d'un produit représente sa résistance au mouvement lorsqu'il est soumis à une contrainte. Dans la présente description on comprendra par « viscosité plastique » tant la viscosité plastique de Bingham que la viscosité plastique de Casson. En effet, le comportement de l'aide culinaire selon l'invention à une température d'environ 40°C s'apparente au comportement d'un fluide de Casson mais cependant, dans certains cas, l'équation de Bingham décrira mieux le rhéogramme obtenu. Ainsi la viscosité plastique de l'aide culinaire selon l'invention peut être évaluée à l'aide de l'une des équation suivantes :

$$\eta_B = \frac{\tau - \tau_0}{D} \qquad \text{ou} \qquad \sqrt{\eta_{CA}} = \frac{\sqrt{\tau} - \sqrt{\tau_{CA}}}{\sqrt{D}}$$

où $\eta_B$ définit la viscosité plastique de Bingham et $\eta_{CA}$ définit la viscosité plastique de Casson. Ces viscosités sont obtenues d'après le rhéogramme définissant la contrainte $\tau$ (Pa) en fonction de la vitesse de cisaillement $D$ ($s^{-1}$). Les rhéogrammes obtenus ne passent pas par l'origine mais coupent l'axe des ordonnées au point $\tau_0$ (fluide de Bingham) ou $\tau_{CA}$ (fluide de Casson). Ces valeurs $\tau_0$ ou $\tau_{CA}$, exprimée en Pa.s définissent ce qui est classiquement décrit et que l'on entend dans le présent contexte par « limite d'écoulement ».

Un autre objet de la présente invention concerne un aide culinaire composite présentant un corps principal comprenant un motif ornemental en relief en une matière de composition et/ou de couleur différentes de celles du corps principal.

La viscosité de l'aide culinaire selon l'invention est ainsi suffisamment élevée pour assurer la suspension des particules en dispersion dans la matière grasse et en même temps suffisamment faible pour assurer une infiltration dans les moindres recoins du moule dans lequel il est versé, ceci permettant la reproduction fidèle et fine des profils, détails et reliefs du moule.

Ainsi, dans le présent contexte, on comprend par « moule », un objet pouvant comprendre au moins une empreinte en creux ou en bosse, dans lequel on introduit un mélange fluide qui prend, en se solidifiant, la forme de la ou des empreintes.

D'autre part, grâce aux propriétés rhéologiques de la matière première, l'aide culinaire selon la présente invention présente une surface lisse, brillante et uniforme et non pas terne et dont le toucher n'est ni poisseux ni rugueux. Enfin l'aide culinaire selon la présente invention présente une bonne résistance aux manipulations à température ambiante, ne s'effrite pas et ceci particulièrement au niveau des arêtes de ses angles les plus fins.

En effet, l'aide culinaire selon la présente invention se caractérise par la finesse des dimensions de ses reliefs. Cet aide culinaire se caractérise par la dimension caractéristique de ses reliefs, en creux ou en bosse, qui peut être inférieure à 1 mm, de préférence inférieure à 0,5 mm et de manière plus préférentielle encore inférieure à 0,2 mm. En ce qui concerne la limite inférieure de cette dimension caractéristique, il s'agira d'une dimension correspondant à un relief détectable au toucher, c'est à dire aux environs de 0,05 à 0,1 mm. Par « dimension caractéristique », dans le présent contexte, on comprendra la hauteur et/ou la largeur de ce relief, s'il s'agit d'un relief en creux ou en bosse. Il peut s'agir ainsi de la profondeur d'un relief d'un moule ou de la distance entre les parois d'un moule définissant, par exemple, une gorge profonde étroite. La limite supérieure de la dimension caractéristique des reliefs de l'aide culinaire selon l'invention n'est pas critique, cependant elle sera généralement de l'ordre de 50 mm, par exemple. En effet, une dimension supérieure serait gênante voire inutile bien que cependant parfaitement réalisable et non limitative.

Grâce à la parfaire moulabilité de l'aide culinaire selon l'invention, tout type de formes, des plus simples aux plus complexes peuvent être réalisées. On peut ainsi mouler des formes ludiques du type figurines animales tels que canard, ours, tête de poulet, de logos tridimensionnels, des hémisphères, des tablettes comportant l'inscription d'une marque en relief ou à nouveau une figurine en relief, par exemple. L'aide culinaire selon l'invention peut présenter une cavité ouverte ou non et cette cavité peut être ou non remplie avec des particules comestibles ou non. Ainsi la cavité peut-elle comprendre des croûtons, des céréales, des morceaux de viande, de légumes ou de crustacés séchés ou tout aussi bien des petits objets en matière non comestible tels que des figurines en matière plastique, par exemple. L'aide culinaire selon l'invention peut se présenter dans son moule ou démoulé et disposé dans des alvéoles, par exemple, selon les besoins et les nécessités de distribution au consommateur. De plus l'aide culinaire peut aussi être disposé de manière solidaire, à température ambiante, sur un support tel un bâtonnet ou un réceptacle, par exemple. Ainsi dans le cas d'un aide culinaire disposé sur un bâtonnet, le consommateur peut aisément agiter ledit bâtonnet dans une tasse d'eau bouillante pour obtenir très rapidement un bouillon ou un potage, par exemple, ceci grâce à la fonte et à la dissolution rapides des composants de l'aide culinaire selon l'invention

Les propriétés rhéologiques de l'aide culinaire selon la présente invention sont dépendantes de la proportion et des propriétés rhéologiques de la matière grasse comprise dans l'aide culinaire en question. Ainsi, la matière grasse comprise dans l'aide culinaire selon l'invention présente un contenu en solides inférieur à environ 5 à 7 % à une température égale ou supérieure à 35°C, de préférence nul à une température égale ou supérieure à 35 °C. Cette matière grasse peut être une graisse végétale plus ou moins hydrogénée, plus ou moins raffinée tel un substitut de beurre de cacao, par exemple.

Les agents liants compris dans l'aide culinaire selon l'invention peuvent être choisis dans le groupe comprenant les amidons, les amidons modifiés chimiquement et/ou physiquement, les dextrines, les maltodextrines, les sirops de glucose de DE variable, les gommes, les farines, les solides non gras du lait, utilisés seuls ou en mélange, par exemple. L'aide culinaire selon l'invention peut aussi comprendre des émulsifiants utilisés seuls ou en mélange. Il peut s'agir de lécithine de soja, de mono et/ou de diglycérides, par exemple.

Les agents aromatisants compris dans l'aide culinaire selon l'invention peuvent être choisis dans le groupe comprenant sel, sucres, épices, glutamate mono-sodique, poudres, arômes ou extraits de légumes, viande, ou fromage, utilisés seuls ou en mélange, par exemple. Les épices peuvent être du poivre, du paprika, du curry, de l'ail, de l'oignon, par exemple. Des colorants pourront aussi être compris dans l'aide culinaire, soit sous forme d'épices telles que du curry ou du paprika ou sous la forme plus classique de colorants alimentaires, par exemple.

Les agents liants ainsi que les agents aromatisants compris dans l'aide culinaire selon l'invention peuvent se présenter sous forme pulvérulente et la taille moyenne des particules peut être comprise entre 10 et 500 μm, de préférence entre 20 et 200 μm et de manière plus préférentielle encore entre 50 et 100 μm. La taille moyenne réduite des particules d'agents liants et aromatisants comprises dans l'aide culinaire selon l'invention participe à l'obtention d'un produit dont les propriétés rhéologiques correspondent à celles désirées de manière à obtenir un produit moulé présentant des reliefs ornementaux particulièrement fins ainsi qu'une surface lisse, brillante et uniforme.

Cependant l'aide culinaire selon la présente invention peut aussi comprendre dans sa masse des éléments visuels dont la taille est supérieure à la taille des particules d'agents aromatisants et d'agents liants. Par éléments visuels on entendra des particules aisément identifiables à l'oeil nu. De tels éléments peuvent être des croûtons, des morceaux de légumes, de viande ou de crustacés, des céréales sous forme de flocons ou de particules extrudées plus ou moins expansées, par exemple.

La présente invention concerne aussi un procédé de fabrication du présent aide culinaire comprenant les étapes suivantes :

- mélanger 5 à 50 parts d'agents liants et 20 à 70 parts d'agents aromatisants à 25 à 39 parts de matière grasse fondue, à une température d'environ 37 à 43°C, de préférence 40°C, de manière à obtenir un mélange présentant une viscosité plastique comprise entre 1 et 20 Pa.s, de préférence entre 2 et 8 Pa.s, et une limite d'écoulement comprise entre 0,5 et 20 Pa, de préférence entre 1 et 10 Pa,

- couler le mélange obtenu dans un moule,
- refroidir jusqu'à durcissement.

Le mélange utilisé pour la mise en oeuvre du procédé présente ainsi, à une température de l'ordre de 40°C, des propriétés rhéologiques telles qu'il peut aisément être coulé dans un moule et épouser ainsi fidèlement et parfaitement tous les reliefs en creux ou en bosse, plus ou moins anguleux.

L'étape de refroidissement du mélange moulé peut être réalisée à une température comprise entre -25°C et 15°C par passage dans un tunnel de refroidissement ventilé, par exemple.

Les moules utilisés peuvent être en matière plastique ou métallique. La matière plastique peut être une matière plastique souple ou rigide. L'aide culinaire une fois refroidi, peut être démoulé par application de vibrations sur le moule et retournement de ce dernier, par exemple. Si, des moules non-récupérable en matière plastique souple ou non sont utilisés, l'aide culinaire n'est pas démoulé et peut être emballé dans son moule dans un emballage en plastique souple ou cartonné, par exemple.

La présente invention concerne aussi un procédé de fabrication d'un aide culinaire composite pouvant comprendre un motif ornemental en relief en une matière de composition différente de celle du corps principal. Ainsi le procédé pour fabriquer un tel aide culinaire comprend les étapes suivantes :

- mélanger 5 à 50 parts d'agents liants et 20 à 70 parts d'agents aromatisants à 25 à 39 parts de matière grasse fondue, à une température d'environ 37 à 43°C, de préférence 40°C, de manière à obtenir un mélange présentant une viscosité plastique comprise entre 1 et 20 Pa.s, de préférence entre 2 et 8 Pa.s, et une limite d'écoulement comprise entre 0,5 et 20 Pa, de préférence entre 1 et 10 Pa,
- couler ce premier mélange dans un moule,
- refroidir de manière à solidifier le mélange moulé,
- réaliser un deuxième en mélangeant 5 à 50 parts d'agents liants et 20 à 70 parts d'agents aromatisants à 25 à 39 parts de matière grasse fondue, à une température d'environ 37 à 43°C, de préférence 40°C, de manière à obtenir un mélange présentant une viscosité plastique comprise entre 1 et 20 Pa.s, de préférence entre 2 et 8 Pa.s, et une limite d'écoulement comprise entre 0,5 et 20 Pa, de préférence entre 1 et 10 Pa,
- couler ce second mélange dans le moule contenant le premier mélange moulé et solidifié,
- refroidir de manière à solidifier l'ensemble.

Les deux mélanges utilisés pour réaliser l'aide culinaire composite selon le procédé précédemment décrit présentent une composition similaire au sens ou les fourchettes quantitatives des ingrédients entrant dans leur composition sont identiques. Cependant, si l'on souhaite réaliser un aide culinaire composite présentant un contraste de couleur ou de texture attrayant, on préférera utiliser deux mélanges dont la composition quantitative est légèrement différente. Néanmoins, il est important que les deux mélanges présentent la meme gamme de caractéristiques rhéologiques de manière à assurer une bonne moulabilité et obtenir ainsi un produit présentant les caractéristiques ornementales et de relief requises.

Lorsque des éléments visuels sont inclus dans la masse de l'aide culinaire selon l'invention, ces éléments visuels peuvent être introduits après coulage d'une couche du mélange constitutif de l'aide culinaire. Après répartition des éléments visuels, une deuxième couche de mélange constitutif de l'aide culinaire peut éventuellement être coulée de manière à recouvrir les éléments visuels en totalité ou en partie de manière à avoir les éléments visuels pris dans la masse dans leur intégralité ou affleurant au niveau de la face opposée à celle portant un relief ornemental, par exemple.

Finalement, l'invention concerne aussi une méthode visant à fournir au consommateur un plat cuisiné reconstitué par chauffage au four micro-onde en milieu aqueux, d'un mélange comprenant un produit amylacé déshydraté et un aide culinaire selon la présente invention. L'invention concerne enfin l'utilisation d'un aide culinaire selon la présente invention pour la reconstitution d'un plat cuisiné à base de produit amylacé déshydraté, par chauffage au four micro-onde en milieux aqueux. L'aide culinaire selon l'invention est principalement utilisé pour la reconstitution de soupes, bouillons, sauces par ajout de liquide chaud ou par chauffage en milieux aqueux, par exemple. Ainsi l'aide culinaire selon la présente invention se prête particulièrement bien au chauffage en milieu aqueux au four micro-ondes car il fond et se dissout rapidement et de manière homogène sans formation de grumeaux. L'aide culinaire peut être disposé dans un récipient adéquat, recouvert d'eau froide et mis à chauffer au four micro-onde pendant un temps et à une intensité suffisante pour porter la température du mélange à une valeur de l'ordre de 85 à 100°C, c'est à dire 30 secondes à 2 minutes à une puissance comprise entre 600 et 1000 Watts environ pour 100 à 200 ml de liquide et un aide culinaire d'environ 75 à 125 grammes, par exemple. Ainsi et ceci de manière surprenante, l'aide culinaire, lors d'un tel chauffage, se dissout rapidement et très facilement dans le liquide sans former de grumeaux et on peut ainsi obtenir par un simple remuage dès la sortie du four micro-onde, un produit homogène de type soupe ou bouillon prêt à consommer. Une telle procédure d'emploi de l'aide culinaire selon l'invention peut être réalisée dans un récipient contenant des pâtes à cuisson rapide ou instantanée. Les pâtes peuvent être disposées dans le récipient et l'aide culinaire peut être posé au-dessus ou au-dessous. Pour des raisons esthétiques, on préférera que l'aide culinaire soit disposé sur le dessus. En effet, un des avantages du présent aide culinaire est sa moulabilité fidèle. Ainsi, pour des raisons esthétiques, on préférera qu'il soit disposé sur le dessus de manière à ce que le consommateur puisse voir le relief ornemental. Cependant une telle disposition n'est nullement critique. Après ajout d'eau froide dans une quantité suffisante pour assurer l'hydratation des pâtes, l'eau pouvant affleurer l'aide culinaire ou le submerger totalement, le tout est mis à chauffer au four micro-onde pendant environ 1 à 3 minutes à une puissance de l'ordre de 750 à 1000 Watts pour une dose d'environ 50 à 60 grammes de pâtes, 40 à 50 grammes d'aide culinaire et 200 à 250 ml d'eau, par exemple. Après chauffage, l'aide culinaire est fondu ou ruisselle sur les pâtes cuites et ne forme pas de grumeaux. Un simple mélange à la cuiller est nécessaire pour homogénéiser le tout et obtenir ainsi un plat prêt à consommer. L'utilisation de l'aide culinaire selon l'invention peut aussi très bien se faire par ajout d'eau bouillante en lieu et place du chauffage au four micro-onde. Un produit similaire est obtenu très facilement.

Si l'aide culinaire selon l'invention comprend des éléments visuels tels que des flocons ou morceaux de céréales, céréales extrudées, morceaux de légumes séchés, par exemple, ces derniers peuvent remonter à la surface une fois l'aide culinaire dissout.

Des exemples de mode de réalisation de l'aide culinaire sont exposés de manière détaillée dans les exemples suivants.

EXEMPLE 1 Tablette soupe à la tomate

Les ingrédients pulvérulents suivants sont mélangés dans un mixer HOBART :

| Sel fin | 50 g |
|---|---|
| Glutamate | 20 g |
| Sucre | 60 g |
| Poudre de tomate | 200 g |
| Amidon de pomme de terre | 100 g |
| Farine de blé | 200 g |
| Poudre d'oignon | 10 g |
| Poudre d'ail | 5 g |

Les ingrédients pulvérulents du mélange précédent présentent une granulométrie moyenne de 120 µm.

La matière grasse (330 g, substitut de beurre de cacao) est fondue à une température de l'ordre de 40°C.

Le mélange pulvérulent est ajouté à la matière grasse et le tout est mélangé et homogénéisé à une température de 40°C dans un mélangeur thermostaté.

Le mélange ainsi obtenu présente une viscosité plastique de 7 Pa.s et une limite d'écoulement de 1 Pa.

Ce mélange est coulé dans des moules rectangulaires de 9 cm sur 5 cm et de 0,7 cm d'épaisseur.

Les moules, une fois remplis sont refroidis dans une armoire réfrigérée à une température de 4°C.

Les tablettes sont ensuite démoulées par application de vibrations.

On obtient ainsi des tablettes de couleur rouge d'environ 30 g dont la surface est particulièrement lisse et brillante.

EXEMPLE 2 Figure soupe au fromage

Le mode de réalisation du produit selon l'invention est identique à celui décrit à l'exemple 1 sauf en ce qui concerne les ingrédients et le moule utilisé.

Les ingrédients pulvérulents suivants sont utilisés :

| Lactose | 350 g |
|---|---|
| Sel fin | 80 g |
| Poudre de lait écrémé | 50 g |
| Amidon de maïs | 50 g |
| Poudre de fromage | 50 g |
| Glutamate | 20 g |

Le mélange pulvérulent dont les divers ingrédients présentent une granulométrie moyenne de 100 µm est ajouté à la matière grasse (340 g de substitut de beurre de cacao) fondue à 40°C et le tout est homogénéisé dans un mélangeur thermostaté à 40°C. Le mélange ainsi obtenu présente une viscosité plastique de 8 Pa.s et une limite d'écoulement de 1,2 Pa.

Les moules utilisés sont des moules comportant un relief en creux en forme de figurine de canard, d'une contenance d'environ 35 ml chacun.

On obtient ainsi, après démoulage, des figurines en forme de petit canard pesant environ 30 g, dont la surface est lisse et brillante et dont les fins reliefs inférieurs à 1 mm (oeil, bec, plumes) sont reproduits particulièrement fidèlement.

EXEMPLE 3 Tablette composite Tomate-Fromage avec figurine en relief.

Dans ce cas, les mélanges constitutifs des deux parties de la tablette sont préparés, coulés et refroidis successivement. Le moule utilisé est un moule rectangulaire similaire à celui utilisé dans l'exemple 1 à la différence près qu'il comprend en plus un relief en creux définissant une figure du type lapin défini à l'intérieur du périmètre rectangulaire.

Le mélange au fromage constitutif de la figure en relief (lapin) est réalisé selon la recette de l'exemple 2 et coulé en premier dans la partie en relief creux du moule, puis refroidi pour assurer la solidification.

Le mélange à la tomate constitutif de la base de la tablette est réalisé selon la recette de l'exemple 1 et est coulé dans le moule comprenant le mélange au fromage solidifié, de manière à le recouvrir complètement d'un couche d'environ 0,7 mm.

Le tout est refroidi jusqu'à durcissement puis démoulé. On obtient ainsi une tablette rectangulaire composite d'environ 30 g comportant une figure en relief de couleur jaune se détachant de la base de la tablette rouge. La figure en relief présente des détails particulièrement fins, eux-même en relief, tels que les yeux, la bouche, les oreilles. Ces derniers reliefs visibles et perceptibles au toucher présentent une dimension caractéristique inférieure au millimètre.

EXEMPLE 4 Tablette tomate portionnable

Le mode de réalisation du produit selon l'invention est identique à celui décrit à l'exemple 1 sauf en ce qui concerne le moule utilisé, de plus des flocons de céréales expansés et des croutons sont inclus dans la masse de la tablette.

Le moule utilisé est un moule rectangulaire de 20 cm de long sur 10 cm de large et de 2 cm de profondeur comportant 3 rainures convexes de 2 mm de large et de 2 mm de profondeur dans le sens de la longueur et 3 rainures convexe de même dimensions dans le sens de la largeur définissant ainsi 16 rectangles en creux avec amorces de découpe, du type plaquette de chocolat. Chaque relief en creux comporte en plus un relief définissant une figurine de type dinosaure.

Une première couche du mélange tomate identique à celui de l'exemple 1 est coulé dans le moule sur une épaisseur d'environ 1 cm. Des flocons de céréales expansés ainsi que des petits croutons carrés de 5 mm d'arête sont répartis de manière uniforme sur cette couche avant solidification. L'ensemble est mis à refroidir dans une armoire réfrigérée à 4°C pendant le temps nécessaire au durcissement. Une fois cette première couche durcie, une seconde couche de composition identique est coulée sur une épaisseur d'environ 1 cm. L'ensemble est à nouveau refroidi comme précédemment puis démoulé.

On obtient ainsi une tablette portionnable comportant 16 rectangles, chacun d'eux présentant un relief en forme de figurine de dinosaure aux reliefs très fins inférieur à 0,5 mm.

EXEMPLE 5 Préparation d'une soupe dans l'eau chaude

Un aide culinaire tel que celui décrit à l'exemple 1 ou 2 est mis dans un bol et recouvert de 170 ml d'eau à 100°C. Après 30 secondes d'attente, un remuage rapide à la cuillère permet d'homogénéiser la soupe obtenue qui ne présente pas de grumeaux et qui est ainsi prête à consommer.

EXEMPLE 6 Préparation d'une soupe au four micro-onde

On procède de la même manière que ce qui est indiqué à l'exemple 5 à la différence que l'aide culinaire est recouvert d'eau froide et mis à chauffer à four micro-onde à 1000 Watts pendant 45 secondes. Un remuage rapide à la cuillère permet d'obtenir une soupe sans grumeaux prête à consommer.

EXEMPLE 7 Cuillère-soupe

Le mélange constitutif de l'aide culinaire selon les exemples 1 ou 2 est coulé, non pas dans un moule, mais dans la partie creuse d'une cuillère à soupe en plastique puis refroidi par les moyens indiqués précédemment.

Il suffit ainsi d'agiter la cuillère dans une tasse contenant 200 ml d'eau bouillante pour assurer rapidement la fonte de l'aide culinaire et obtenir ainsi une délicieuse soupe.

Cette cuillère peut être emballée sous un film plastique et aisément être transportée dans un sac pour être utilisée selon les désirs du consommateur.

EXEMPLE 8 Plat préparé à base des pâtes

Un aide culinaire composite de type tomate-fromage comme décrit à l'exemple 3 est disposé dans un bol au dessus de 40 g de pâtes intantannées. On verse sur cet ensemble 200 ml d'eau froide et on chauffe le tout dans un four micro-onde pendant 2 minutes à 650 Watts. On laisse reposer l'ensemble pendant environ 2 minutes sur le plan de travail. La tablette est ainsi quasiment fondue mais les contours sont encore distinguables, en particulier la figurine centrale dont on devine encore les formes. On mélange aisémentle tout à l'aide d'une fourchette et on obtient rapidement un plat individuel de pâtes tomate-fromage sans grumeaux.

**Revendications**

1. Aide culinaire comprenant 25 à 39 % de matière grasse, 20 à 70 % d'agents aromatisants, 5 à 50 % d'agents liants, **caractérisé en ce qu'**il présente, à une température de 37 à 43°C, une viscosité plastique comprise entre 1 et 20 Pa.s et une limite d'écoulement comprise entre 0,5 et 20 Pa.

2. Aide culinaire selon la revendication 1, **caractérisé en ce que** la matière grasse présente un contenu en solides inférieur à 5 % à une température égale ou supérieure à 35°C.

3. Aide culinaire selon les revendications 1 et 2, **caractérisé en ce que** les agents liants et aromatisants sont sous la forme de particules en suspension dans la matière grasse et que la taille moyenne de ces particules est comprise entre 10 et 500 μm.

4. Aide culinaire selon les revendications 1 à 3, **caractérisé en ce qu'**il présente au moins un relief dont les dimensions caractéristiques sont comprises entre 0,05 et 1 mm.

5. Procédé de fabrication d'un aide culinaire à haute moulabilité, dans lequel on réalise les étapes suivantes :

   - mélanger 5 à 50 parts d'agents liants et 20 à 70 parts d'agents aromatisants à 25 à 39 parts de matière grasse fondue, à une température d'environ 37 à 43°C de manière à obtenir un mélange présentant une viscosité plastique comprise entre 1 et 20 Pa.s, et une limite d'écoulement comprise entre 0,5 et 20 Pa,
   - couler le mélange obtenu dans un moule,
   - refroidir jusqu'à durcissement.

6. Procédé de fabrication d'un aide culinaire composite à haute moulabilité, dans lequel on réalise les étapes suivantes :

   - mélanger 5 à 50 parts d'agents liants et 20 à 70 parts d'agents aromatisants à 25 à 39 parts de matière grasse fondue, à une température d'environ 37 à 43°C de manière à obtenir un mélange présentant une viscosité plastique comprise entre 1 et 20 Pa.s, et une limite d'écoulement comprise entre 0,5 et 20 Pa,
   - couler ce premier mélange dans un moule,
   - refroidir de manière à solidifier le mélange moulé,
   - réaliser un deuxième mélange en mélangeant 5 à 50 parts d'agents liants et 20 à 70 parts d'agents aromatisants à 25 à 39 parts de matière grasse fondue, à une température d'environ 37 à 43°C de manière à obtenir un mélange présentant une viscosité plastique comprise entre 1 et 20 Pa.s, et une limite d'écoulement comprise entre 0,5 et 20 Pa,
   - couler ce second mélange dans le moule contenant le premier mélange moulé et solidifié,
   - refroidir de manière à solidifier l'ensemble.

7. Procédé selon les revendications 5 et 6, **caractérisé en ce que** l'aide culinaire refroidi et durci est démoulé.

8. Méthode visant à fournir au consommateur un plat cuisiné reconstitué par chauffage au four micro-onde en milieu aqueux, d'un mélange comprenant un produit amylacé déshydraté et un aide culinaire selon l'un des revendications 1 à 4.

9. Utilisation d'un aide culinaire selon l'une des revendications 1 à 4 pour la reconstitution d'un plat cuisiné à base de produit amylacé déshydraté par chauffage au four micro-onde en milieux aqueux.

| | Office européen des brevets | **RAPPORT DE RECHERCHE EUROPEENNE** | Numéro de la demande<br>EP 00 12 7590 |

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (Int.Cl.7) |
|---|---|---|---|
| X | GB 954 241 A (KOOPMANS MEELFABRIEKEN N V)<br>2 avril 1964 (1964-04-02)<br>* page 2, ligne 25 – ligne 31;<br>revendications 1-3; exemples *<br>--- | 1-3,5,<br>7-9 | A23L1/40<br>A23L1/052<br>A23L1/22 |
| X<br>Y | US 4 988 527 A (BUCKHOLZ JR LAWRENCE L ET<br>AL) 29 janvier 1991 (1991-01-29)<br>* exemple 28B *<br>--- | 1-3<br>4-9 | |
| Y,D | US 3 966 993 A (LUCK JOHN V)<br>29 juin 1976 (1976-06-29)<br>* colonne 1, ligne 45 – ligne 56 *<br>* colonne 2, ligne 3 – colonne 4, ligne<br>28; revendications; exemples *<br>--- | 1-9 | |
| Y | WO 98 12934 A (NESTLE SA ;MAHE YANNICK<br>(FR); RUSTUEL PASCAL (FR); FROT COUTAZ<br>ANN) 2 avril 1998 (1998-04-02)<br>* page 3, ligne 9 – page 5, ligne 8;<br>revendications 1-7; exemples *<br>------ | 1-9 | DOMAINES TECHNIQUES<br>RECHERCHES (Int.Cl.7)<br><br>A23L |

Le présent rapport a été établi pour toutes les revendications

| Lieu de la recherche | Date d'achèvement de la recherche | Examinateur |
|---|---|---|
| MUNICH | 24 avril 2001 | Vernier, F |

CATEGORIE DES DOCUMENTS CITES

X : particulièrement pertinent à lui seul
Y : particulièrement pertinent en combinaison avec un
    autre document de la même catégorie
A : arrière–plan technologique
O : divulgation non–écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**       EP 00 12 7590

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2001

| Document brevet cité au rapport de recherche | | Date de publication | Membre(s) de la famille de brevet(s) | | Date de publication |
|---|---|---|---|---|---|
| GB  954241 | A | 02-04-1964 | AUCUN | | |
| US 4988527 | A | 29-01-1991 | US | 4917913 A | 17-04-1990 |
| | | | US | 4999207 A | 12-03-1991 |
| | | | US | 4960603 A | 02-10-1990 |
| | | | DE | 69004398 D | 09-12-1993 |
| | | | DE | 69004398 T | 31-03-1994 |
| | | | DE | 420402 T | 28-11-1991 |
| | | | EP | 0420402 A | 03-04-1991 |
| | | | US | 4966783 A | 30-10-1990 |
| | | | US | 4988532 A | 29-01-1991 |
| US 3966993 | A | 29-06-1976 | AUCUN | | |
| WO 9812934 | A | 02-04-1998 | AU | 4555897 A | 17-04-1998 |
| | | | BR | 9711542 A | 24-08-1999 |
| | | | CA | 2260788 A | 02-04-1998 |
| | | | CN | 1230874 A | 06-10-1999 |
| | | | CZ | 9900972 A | 11-08-1999 |
| | | | EP | 1006808 A | 14-06-2000 |
| | | | HU | 9904412 A | 28-05-2000 |
| | | | JP | 2001502167 T | 20-02-2001 |
| | | | PL | 332284 A | 30-08-1999 |
| | | | SK | 36199 A | 08-10-1999 |
| | | | TR | 9900456 T | 21-06-1999 |
| | | | ZA | 9708012 A | 09-03-1999 |

EPO FORM P0460